(19) **Europäisches Patentamt**

**European Patent Office**

**Office européen des brevets**

(11) **EP 0 904 210 B1**

(12) **EUROPÄISCHE PATENTSCHRIFT**

(45) Veröffentlichungstag und Bekanntmachung des Hinweises auf die Patenterteilung:
**13.09.2000   Patentblatt 2000/37**

(21) Anmeldenummer: **97929184.6**

(22) Anmeldetag: **13.06.1997**

(51) Int Cl.[7]: **B60G 17/015**, B60C 23/06

(86) Internationale Anmeldenummer:
**PCT/EP97/03102**

(87) Internationale Veröffentlichungsnummer:
**WO 97/47485 (18.12.1997 Gazette 1997/54)**

(54) **VERFAHREN ZUR REGELUNG DES FAHRVERHALTENS EINES FAHRZEUGS**

METHOD OF CONTROLLING VEHICLE HANDLING

PROCEDE POUR REGULER LA TENUE DE ROUTE D'UN VEHICULE

(84) Benannte Vertragsstaaten:
**DE FR GB**

(30) Priorität: **13.06.1996  DE 19623595**

(43) Veröffentlichungstag der Anmeldung:
**31.03.1999   Patentblatt 1999/13**

(73) Patentinhaber: **Continental Teves AG & Co. oHG**
**60488 Frankfurt (DE)**

(72) Erfinder:
• **FENNEL, Helmut**
**D-65812 Bad Soden (DE)**

• **LATARNIK, Michael**
**D-61381 Friedrichsdorf (DE)**

(74) Vertreter: **Blum, Klaus-Dieter**
**Continental Teves AG & Co. oHG,**
**Guerickestrasse 7**
**60488 Frankfurt (DE)**

(56) Entgegenhaltungen:
**EP-B- 0 444 109          US-A- 5 136 513**

## Beschreibung

Die vorliegende Erfindung betrifft ein Verfahren zur Regelung des Fahrverhaltens eines Fahrzeugs gemäß dem Anspruch 1.

Aus der EP 04 441 09 B1 ist ein Verfahren zur Regelung des Fahrverhaltens eines Fahrzeugs bekannt, wobei das Fahrzeug, auf welches das bekannte Verfahren angewendet wird, neben Reifenlatschsensoren zur Erfassung der an den Reifen angreifenden Kräfte und Momente außerdem einen Schwerpunktsbeschleunigungssensor, Radsensoren zur Erfassung der Einzelradumfangsgeschwindigkeit und einen Höhensensor zur Erfassung des Zustandes der Radaufhängung besitzt. Die Verwendung eines Beschleunigungssensors im Schwerpunkt setzt voraus, daß der Schwerpunkt des Fahrzeugs bekannt ist. Allerdings ist ein Fahrzeug immer unterschiedlichen Belastungen und Beladungen ausgesetzt, so daß der Schwerpunkt zum einen durch Fahrzeugeigenbewegungen wie Nick- oder Wankbewegungen und zum anderen durch unterschiedliche Beladung variiert. Demnach kann auch eine Berechnung der Fahrzeugdynamik, welche einen starren Schwerpunkt des Fahrzeugs voraussetzt, nur ungenaue Werte liefern.

Aus der US-A-5 136 513 ist ein Verfahren zur Berechnung der Fahrzeugmasse und des Fahrzeugschwerpunktes bekannt, das sich einer Reihe von Sensoren bedient wie zum Beispiel eines Wegsensors oder Beschleunigungsmessers zur Bestimmung einer Ortsveränderung, mindestens eines Belastungsmessers an der Fahrzeugaufhängung zur Bestimmung der Fahrzeugmasse sowie eines Rotationssensors zur Messung der Massenverlagerung bei Kurvenfahrt.

Aufgabe der vorliegenden Erfindung ist es, ein Verfahren der eingangs genannten Art anzugeben, welches eine zuverlässigere Bestimmung der Fahrzeugdynamik erlaubt und mit möglichst wenig Zusatzsensorik auskommt.

Diese Aufgabe wird gelöst in Verbindung mit den Merkmalen des Anspruchs 1. Das Prinzip der Erfindung besteht darin, anhand der Reifensensorsignale den jeweils aktuellen Fahrzeugschwerpunkt zu ermitteln und neben der Fahrzeugmasse weitere Größen zu ermitteln. Mit diesem Verfahren sind aktuelle, zeitlich variable Bezugsgrößen gegeben, welche die Beschreibung des aktuellen Fahrzustandes genauer machen.

Die Regelgüte eines solchen Verfahrens ist dadurch erhöht, daß das Fahrzeug nicht als Massenpunkt, sondern als Körper mit endlicher Ausdehnung erfaßt wird. In ein solches Massenverteilungsmodell fließen dann bekannte, am Fahrzeug angebrachte Massen wie Motor, Getriebe, Karosserie und dergleichen in ihrer räumlichen Verteilung ein. Das Fahrzeug kann beispielsweise als starrer Körper beschrieben werden, der an vier Federn aufgehängt ist.

Um die aktuelle Massenverteilung festzustellen, werden aufgrund der Reifensensorsignale der Basisverteilung der Masse zusätzliche variable Massen hinzugefügt, wobei zur Vereinfachung das Modell Zusatzmassen an typischen Beladungsorten vorsieht. Typische Beladungsorte sind beispielsweise die Fahrzeugsitze, der Kofferraum und gegebenenfalls das Fahrzeugdach.

Besonders einfach wird die Rechnung, wenn die zusätzlichen Massen als Massenpunkte beschrieben sind, welche sich an den Schwerpunkten der typischen Beladungsorte befinden. Dies sind beispielsweise der Massenschwerpunkt eines durchschnittlichen Fahrerkörpers, der Mittelpunkt des Kofferraumbodens oder ähnliches.

Zumindest für die Beladung eines Dachgepäckträgers gibt jedoch die Annahme eines starren Körpers mit einer bestimmten Massenverteilung die Realität besser wieder, da bei einer Dachbeladung je nach Höhe der Dachlast der Fahrzeugschwerpunkt mehr oder weniger nach oben verlagert wird und der Luftwiderstand des Fahrzeugs zunimmt.

Da aufgrund der Reifensensorik die Belastung der einzelnen Räder bekannt ist und zusätzlich der Massenschwerpunkt ermittelt ist, läßt sich das Verhalten des Fahrzeugs unter bestimmten Bedingungen leicht reproduzieren. Es kann beispielsweise berechnet werden, welche Seitenführungskraft ein bestimmtes Rad beim Durchfahren einer bestimmten Kurve aufbringen kann. Auf diese Weise ist eine genaue Grenzwertbestimmung für charakterisierende physikalische Größen möglich.

Es ist aber auch möglich, anhand des Massenverteilungsmodells den aktuellen Fahrzustand zu ermitteln, wobei eine Sollwertberechnung naturgemäß nicht so genau ausfallen muß, so daß hier durchaus auch ein lineares Einspurmodell oder ähnliches herangezogen werden kann.

Eine nähere Erläuterung der Erfindung erfolgt nun anhand der Beschreibung von zwei Figuren. Es zeigt:

Fig. 1     schematisch ein Fahrzeug, auf welches das erfindungsgemäße Verfahren anwendbar ist,

Fig. 2     ein Ausführungsbeispiel eines erfindungsgemäßen Verfahrens zur Giermomentenregelung eines Kraftfahrzeugs.

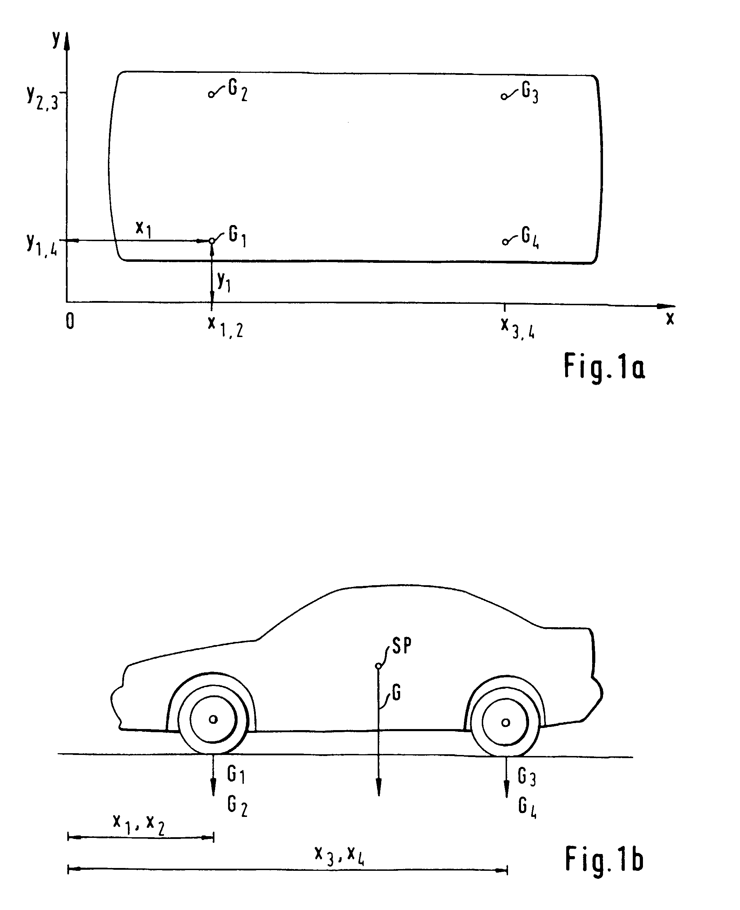

Fig. 1 ist unterteilt in Fig. 1 a und 1 b. Fig. 1 a zeigt ein Fahrzeug in Draufsicht in schematischer Darstellung, wobei die geometrische Lage der Radaufstandsflächen eingezeichnet ist. Mit den Kräften $G_1$, $G_2$, $G_3$ und $G_4$ sind die auf den jeweiligen Reifen wirkenden Gravitationskräfte bezeichnet. Die Koordinaten dieser Reifen sind also $x_1$, $y_1$ bis $x_4$, $y_4$.

Fig. 1 b zeigt dasselbe Fahrzeug schematisch in seitlicher Ansicht. Es ist zusätzlich die Lage eines fiktiven Schwerpunktes SP eingezeichnet. Auf diesen Schwerpunkt wirkt die Gesamtgravitationskraft G.

Die Fahrzeugmasse läßt sich auf einfache Weise durch Aufsummieren der einzelnen auf die Räder wirkenden Gravitationskräfte und Division der Summe durch die Erdbeschleunigung g ermitteln:

$$m = \frac{G_1 + G_2 + G_3 + G_4}{g}$$

Die Schwerpunktskoordinaten in der Radaufstandsebene lassen sich demnach durch folgende Gleichungen berechnen:

$$x_{SP} = \frac{G_1 x_1 + G_2 x_2 + G_3 x_3 + G_4 x_4}{G_1 + G_2 + G_3 + G_4}$$

$$y_{SP} = \frac{G_1 y_1 + G_2 y_2 + G_3 y_3 + G_4 y_4}{G_1 + G_2 + G_3 + G_4}$$

Die Schwerpunktskoordinate senkrecht zur Radaufstandsebene kann beispielsweise durch die Messung von Seitenkräften beim definierten Durchfahren einer Kurve ermittelt werden.

Für ein gegebenes Fahrzeug kann einem Massenverteilungsmodell eine bekannte Basismassenverteilung zugrunde gelegt werden, welche die Lage von Motor, Getriebe, Karosserie und anderen Zubehörteilen zugrunde gelegt ist.

Aufbauend auf einer solchen Basismassenverteilung kann anhand der auf die einzelnen Räder wirkenden Kräfte, welche sich nicht nur auf die Gravitationskräfte beschränken, eine variable Massenverteilung errechnet werden, die veränderliche am Fahrzeug befindliche Massen berücksichtigt. Zusätzliche Belastungen der einzelnen Reifen werden dann in Massen umgerechnet, welche dann an die Orte der Sitzplätze, des Kofferraums und/oder des Dachgepäckträgers im Massenverteilungsmodell gesetzt werden. Bei diesen zusätzlichen Massen an den typischen Orten für variable zusätzliche Beladung kann es sich um körperendliche Ausdehnung oder auch um Massenpunkte handeln. Sofern sich die zusätzlichen Massen innerhalb der Außenkontur des Fahrzeugs befinden, empfiehlt sich die Annäherung durch Punktmassen, da sich die Trägheit endlicher Körper im Vergleich zum Gesamtfahrzeug nicht anders verhält als die Trägheit von Punktmassen. Lediglich außerhalb der Außenkontur des Fahrzeugs angebrachte Massen sollten nach Möglichkeit durch körperendliche Ausdehnungen angenähert werden, da sich mit zunehmender Ausdehnung der Massen auch der Luftwiderstand des Fahrzeugs und andere Größen ändern könnten. Beispielsweise ist bei einer sehr hoch aufgetürmten Dachgepäckträgerbeladung eine Verlagerung des Fahrzeugschwerpunktes nach oben zu verzeichnen.

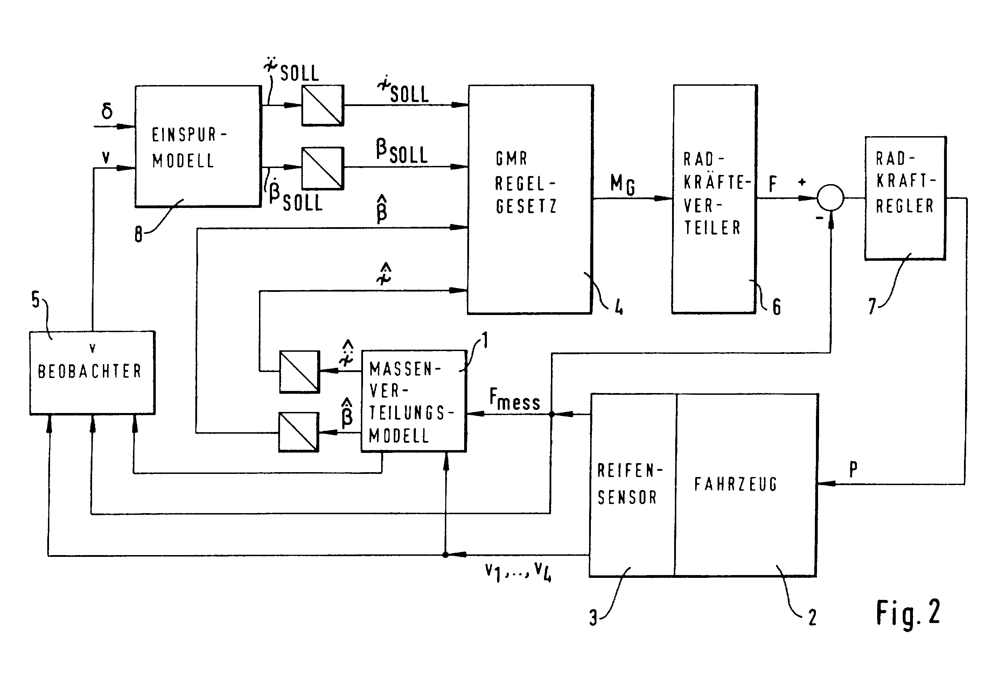

In Fig. 2 ist ein derartiges Massenverteilungsmodell 1 in ein Verfahren zur Regelung der Fahrstabilität im Sinne einer Giermomentenregelung eingegliedert. Die Regelstrecke des Regelverfahrens wird vom Fahrzeug 2 gebildet, welches mit Reifensensoren versehen ist. Diese Reifensensorik 3 erfaßt die einzelnen Radlasten sowie auch Seiten- und Torsionskräfte, welche an den einzelnen Reifen angreifen. Zusätzlich werden die Einzelradgeschwindigkeiten $v_1$ bis $v_4$ erfaßt. Auch diese können durch geeignete Reifensensorik ermittelt werden oder aber durch konventionelle Radsensoren. In das Massenverteilungsmodell 1 fließen die Einzelradgeschwindigkeiten $v_1$ bis $v_4$ sowie die gemessenen Kräfte wie z. B. Radlasten, Querkräfte und Längskräfte an den einzelnen Rädern ein. Anhand eines solchen Massenverteilungsmodells lassen sich die Gierwinkelbeschleunigung und die Schwimmwinkelgeschwindigkeit des Fahrzeugs ermitteln, ohne daß auf ein zusätzliches Gierratensensorsignal oder Querbeschleunigungssignal zugegriffen werden müßte. Dies vereinfacht und verbilligt die Fahrzeugsensorik.

Durch Integration nach der Zeit erhält man aus der Gierwinkelbeschleunigung und der Schwimmwinkelgeschwindigkeit die Gierrate $\dot{\psi}$ und den Schwimmwinkel $\beta$ des Fahrzeugs. Diese fließen als aktuelle Ist-Zustände in ein an sich bekanntes Giermomentenregelgesetz 4 ein.

Die Sollvorgaben für die Regelung werden auf andere Weise berechnet. Hierzu werden die Einzelradgeschwindigkeiten in einem Geschwindigkeitsbeobachter 5 in eine Fahrzeug-Referenzgeschwindigkeit v umgerechnet. Ein lineares Einspurmodell 8 berechnet aus dieser Referenzgeschwindigkeit v und dem Lenkeinschlag δ der Vorderräder Zielvorgaben für die Schwimmwinkelgeschwindigkeit und die Gierwinkelbeschleunigung. Auch diese Werte werden aufintegriert zu Sollvorgaben für die Gierrate $\dot{\psi}$ und den Schwimmwinkel $\beta$ des Fahrzeugs.

Eine Alternative zur dargestellten Regelung könnte auch so aussehen, daß direkt die jeweiligen Gierwinkelbeschleunigungen und Schwimmwinkelgeschwindigkeiten miteinander verglichen werden und im Giermomentenregelgesetz 4 verarbeitet werden.

Im aktuellen Beispiel jedoch werden also die Schwimmwinkel und die Gierraten miteinander verglichen und in ein aufzubringendes Sollgiermoment $M_G$ umgerechnet. Dieses aufzubringende Sollgiermoment $M_G$ wird dann in einem Radkräfteverteiler 6 in auf die einzelnen Räder aufzubringende Radkräfte F umgerechnet. Hierbei handelt es sich um Sollkräfte. Die Istkräfte entsprechen den gemessenen Kräften $F_{mess}$, welche von den Reifensensoren 3 erfaßt werden. Durch Differenzbildung der Sollkräfte F mit den Istkräften $F_{mess}$ werden in einem Radkraftregler 7 die einzelnen Differenzkräfte beispielsweise in Bremsdrücke umgerechnet. Diese wirken wiederum auf das Fahrzeug 2 ein, woraus sich neue, veränderte Kräfteverhältnisse und Radgeschwindigkeiten an den einzelnen Reifen ergeben.

Das Besondere an der Erfindung ist es, daß mittels der Kräfte- und Momentenerfassung an den einzelnen Reifen teure Sensorik eingespart wird und eine schnelle Erfassung des Fahrzeug-Istzustandes möglich ist. Wie zu sehen ist, fließen die gemessenen Kräfte $F_{mess}$ unmittelbar zur Differenzbildung mit den ermittelten Sollkräften F in die Rechnung ein, ohne weiterverarbeitet zu werden. Dies ermöglicht eine sehr schnelle Reaktion des Radkraftreglers 7.

**Patentansprüche**

1. Verfahren zur Regelung des Fahrverhaltens eines Fahrzeugs, welches zur Erfassung der an den Fahrzeugreifen angreifenden Kräfte ($F_{mess}$) mit Reifensensoren (3) ausgestattet ist, wobei mithilfe eines abgespeicherten Massenverteilungsmodells (1), welches die Basismassenverteilung des Fahrzeugs enthält, aus den gemessenen Reifenkräften ($G_1$ bis $G_4$) die aktuelle Fahrzeugmasse, der momentane Ort des Massenschwerpunktes, eine variable Massenverteilung (SP) des Fahrzeugs und Größen der Fahrdynamik ($\dot{\psi}, \beta$) ermittelt werden, wobei die variable Massenverteilung so ermittelt wird, daß das Massenverteilungsmodell zur Basismassenverteilung Massen an typischen Beladungsorten hinzufügt.

2. Verfahren nach Anspruch 1, dadurch **gekennzeichnet**, daß die Massen an den typischen Beladungsorten als Massenpunkte im Massenverteilungsmodell angenähert sind.

3. Verfahren nach Anspruch 2, dadurch **gekennzeichnet**, daß solche Massenpunkte sich an den typischen Orten der Schwerpunkte des Fahrers, der Passagiere, der Kofferraumbeladung und/oder des Dachgepäcks befinden.

4. Verfahren nach einem der Ansprüche 1 bis 3, dadurch **gekennzeichnet**, daß die Masse an mindestens einem Beladungsort als Körper endlicher Ausdehnung abgelegt ist.

5. Verfahren nach einem der Ansprüche 2 bis 4, dadurch **gekennzeichnet,** daß anhand des Massenverteilungsmodells (1) zumindest die Giergeschwindigkeit ($\dot{\psi}$) oder der Schwimmwinkel ($\beta$) oder eine zeitliche Ableitung dieser Größen berechnet wird.

6. Verfahren nach Anspruch 5, dadurch **gekennzeichnet,** daß über das Massenverteilungsmodell (1) lediglich das Ist-Fahrverhalten des Fahrzeugs (2) ermittelt wird, während das Soll-Fahrverhalten mittels eines linearen Einspurmodells berechnet wird.

**Claims**

1. A process for controlling the driving behavior of an automotive vehicle provided with tire sensors (3) for determining the forces ($F_{mess}$) applied to the vehicle tires, wherein by way of a memorized mass distribution model (1) which contains the basic mass distribution of the vehicle, the actual vehicle mass, the momentary location of the mass point of gravity, a variable mass distribution (SP) of the vehicle and values of the vehicle dynamics ($\dot{\Psi}, \beta$) are calculated from the measured tire forces ($G_1$ through $G_4$), and the variable mass distribution is so determined that the mass distribution model for the basic mass distribution adds mass to typical loading sites.

2. A process according to claim 1, characterized in that the masses, at the typical loading sites, in the mass distribution model, are approximated as points of mass.

3. A process according to claim 2, characterized in that such points of mass are provided at the typical locations of the points of gravity of driver, passengers, luggage compartment load and/or of the roof load.

4. A process according to any one of claims 1 through 3, characterized in that the mass at least at one loading site is applied as a body of finite expansion.

5. A process according to any one of claims 2 to 4, characterized in that at least the yaw speed ($\dot{\Psi}$) or the side slip angle ($\beta$) or a time-related derivative thereof is calculated from the mass distribution model (1).

6. A process according to claim 5, characterized in that only the actual driving behavior of the automotive vehicle (2) is determined from the mass distribution model (1) while the nominal driving behavior is calculated from a linear one-track model.

**Revendications**

1. Procédé pour réguler la tenue de route d'un véhicule qui est équipé de capteurs (3) de pneumatiques pour enregistrer les forces ($F_{mess}$) agissant sur les pneumatiques du véhicule, procédé selon lequel, à l'aide d'un modèle (1) mémorisé de répartition de masse qui contient la répartition de masse de base du véhicule, on détermine à partir des forces mesurées de pneumatiques ($G_1$ à $G_4$) la masse actuelle du véhicule, l'emplacement momentané du centre de gravité de masse, une répartition de masse variable (SP) du véhicule et des paramètres ($\psi$, $\beta$) de la dynamique du mouvement du véhicule, la répartition de masse variable étant déterminée de telle sorte que le modèle de répartition de masse ajoute à la répartition de masse de base des masses en des emplacements de chargement typiques.

2. Procédé selon la revendication 1, **caractérisé** en ce que les masses aux emplacements de chargement typiques sont approchées dans le modèle de répartition de masse sous forme de points masses.

3. Procédé selon la revendication 2, **caractérisé** en ce que ces points masses se trouvent aux emplacements typiques des centres de gravité du conducteur, des passagers, du chargement du coffre à bagages et/ou des bagages portés sur une galerie de toit.

4. Procédé selon l'une quelconque des revendications 1 à 3, **caractérisé** en ce que la masse en au moins un emplacement de chargement est posée sous forme de corps d'étendue finie.

5. Procédé selon l'une quelconque des revendications 2 à 4, **caractérisé** en ce qu'à l'aide du modèle (1) de répartition de masse, on calcule au moins la vitesse d'embardée ($\psi$) ou l'angle d'attitude ($\beta$), ou une dérivée par rapport au temps de ces paramètres.

6. Procédé selon la revendication 5, **caractérisé** en ce qu'au moyen du modèle (1) de répartition de masse, on détermine uniquement la tenue de route effective du véhicule (2), tandis que la tenue de route de consigne est calculée au moyen d'un modèle linéaire de tenue de cap.

Fig.1a

Fig.1b

Fig. 2

EINSPUR-MODELL

$\ddot{x}_{SOLL}$  $\dot{x}_{SOLL}$

$\delta$

$v$

$\beta_{SOLL}$

$\dot{\beta}_{SOLL}$

$\hat{\beta}$

$\hat{\dot{x}}$

8

GMR REGEL-GESETZ

$M_G$

RAD-KRÄFTE-VER-TEILER

$F$  +  −

RAD-KRAFT-REGLER

4

6

7

5

BEOBACHTER  $v$

$\hat{\dot{x}}$

$\hat{\beta}$

1

MASSEN-VER-TEILUNGS-MODELL

$F_{mess}$

REIFEN-SENSOR

FAHRZEUG

$P$

$v_1,...,v_4$

3

2

EP 0 904 210 B1